# EUROPÄISCHE PATENTSCHRIFT

(11) **EP 3 367 194 B1**
(45) Veröffentlichungstag und Bekanntmachung des Hinweises auf die Patenterteilung: **22.06.2022**
(21) Anmeldenummer: 17157661.4
(22) Anmeldetag: 23.02.2017
(51) Int. Cl.: G05B 19/418, H04L 12/46

(54) **INBETRIEBNAHME VON MASCHINEN MIT VIRTUELLEN KOMPONENTEN IM INSELBETRIEB OHNE IP-ADRESSVERGABE**
COMMISSIONING OF MACHINES WITH VIRTUAL COMPONENTS IN ISOLATED OPERATION WITHOUT IP ADDRESS ALLOCATION
MISE EN SERVICE DE MACHINES FONCTIONNANT EN ÎLOT À L'AIDE DE COMPOSANTS VIRTUELS SANS AFFECTATION D'ADRESSE IP

(43) Veröffentlichungstag der Anmeldung: 29.08.2018
(73) Patentinhaber: Siemens Aktiengesellschaft, 80333 München (DE)
(72) Erfinder: Albrecht, Harald, 90475 Nürnberg (DE); Höme, Stephan, 91126 Schwabach (DE); Peschmann, Steffen, 92355 Velburg (DE); Rziha, Martin, 90513 Zirndorf (DE); Talanis, Thomas, 91336 Heroldsbach (DE)

(56) Entgegenhaltungen:
- EP-A1- 2 506 503
- EP-A1- 2 955 904
- US-A1- 2008 065 243

## Beschreibung

Die vorliegende Erfindung geht aus von einem Betriebsverfahren für ein Rechnernetz, das eine Vielzahl von Anschlüssen aufweist.

Die vorliegende Erfindung geht weiterhin aus von einem Computerprogramm, das Maschinencode umfasst, der von einer Verwaltungskomponente eines Rechnernetzes unmittelbar abarbeitbar ist, wobei bei der Abarbeitung des Maschinencodes die Verwaltungskomponente eine Überwachungskomponente des Rechnernetzes implementiert und das Rechnernetz gemäß einem derartigen Betriebsverfahren betreibt.

Die vorliegende Erfindung geht weiterhin aus von einer Verwaltungskomponente eines Rechnernetzes, wobei die Verwaltungskomponente mit einem derartigen Computerprogramm programmiert ist, so dass sie aufgrund der Abarbeitung des Maschinencodes des Computerprogramms das Rechnernetz gemäß einem derartigen Betriebsverfahren betreibt.

Die vorliegende Erfindung geht weiterhin aus von einem Rechnernetz, das eine Vielzahl von Anschlüssen und eine derartige Verwaltungskomponente aufweist.

In Industriebetrieben werden oftmals eine Vielzahl von automatisierten Produktionsmaschinen betrieben. Diese Produktionsmaschinen sind oftmals standardisiert. Sie weisen insbesondere jeweils eine Mehrzahl von intelligenten Einheiten auf, die über ein lokales Netzwerk der Produktionsmaschine miteinander kommunizieren. Beispielsweise weist eine derartige Produktionsmaschine zumindest ein Automatisierungsgerät, eine Bedienerschnittstelle und eine Sensor-/Aktor-Schnittstelle auf. Oftmals sind sogar mehrere Ein-/Ausgabemodule vorhanden, die über das lokale Netzwerk der Produktionsmaschine zumindest mit dem Automatisierungsgerät, in vielen Fällen zusätzlich auch mit der Bedienerschnittstelle kommunizieren. Derartige Maschinen werden oftmals in gleicher Konfiguration mehrfach gebaut und betrieben.

Zum Betreiben einer derartigen Maschine ist es möglich, diese isoliert zu betreiben (Inselbetrieb). In diesem Fall kann die interne, datentechnische Struktur der Produktionsmaschinen identisch sein. Insbesondere müssen - bezogen auf das interne Netzwerk der Produktionsmaschine - die Adressen der verschiedenen intelligenten Einheiten zwar voneinander verschieden sein. Sie können jedoch für jede neue Produktionsmaschine bei dieser neuen Produktionsmaschine erneut verwendet werden.

Im Inselbetrieb treten verschiedene Probleme auf. Insbesondere ist kein Remote-Zugriff auf die jeweilige Produktionsmaschine möglich. Service und Wartung - beispielsweise ein Datenbackup oder eine Aktualisierung der Software - müssen stets vor Ort an der jeweiligen Produktionsmaschine durchgeführt werden ("man muss hinlaufen"). Im Stand der Technik ist es daher bekannt, das lokale Netzwerk der Produktionsmaschine um einen Netzwerkanschluss zu erweitern. In diesem Fall ist zunächst ein Remote-Zugriff möglich. Dies betrifft nicht nur Service und Wartung, sondern auch den normalen Betrieb der Produktionsmaschinen. Insbesondere ist es auch möglich, die Bedienerschnittstelle nach außen in eine Komponente außerhalb der Produktionsmaschine zu verlagern und dadurch die Produktionsmaschine von außen zu steuern. An der Produktionsmaschine verbleibt nur noch die "nackte" Anzeige einschließlich einer Eingabeeinrichtung wie beispielsweise einer Tastatur oder eines mit der Anzeige kombinierten Touchscreens oder dergleichen. Die Aufbereitung von Daten der Produktionsmaschine einschließlich der Formatierung, in der die aufbereiteten Daten visualisiert werden, erfolgt hingegen zumindest teilweise in der nach außen verlagerten Bedienerschnittstelle. Diese Bedienerschnittstelle außerhalb der Produktionsmaschine wird in der Regel als virtuelle Bedienerschnittstelle bezeichnet.

Die Inbetriebsetzung einer derartigen Produktionsmaschine mit nach außen verlagerter virtueller Bedienerschnittstelle ist erheblich komplexer als die Inbetriebsetzung einer Produktionsmaschine mit interner Bedienerschnittstelle. Denn insbesondere muss eine adresstechnische Anpassung an die Umgebung erfolgen, in der diese Produktionsmaschine in Betrieb genommen wird. Es ist also eine korrekte Einbindung in ein Rechnernetz außerhalb der Produktionsmaschine erforderlich.

Die automatische Einbindung von intelligenten Einheiten in ein Rechnernetz ist zwar bekannt. Im Gegensatz zum normalen IT-Betrieb, wie er beispielsweise in Büros und Rechenzentren auftritt, werden bei der industriellen Automatisierungstechnik im Maschinen- und Anlagenbau einem bestehenden Rechnernetz jedoch nicht einzelne intelligente Einheiten, sondern Gruppen von intelligenten Einheiten hinzugefügt, nämlich gleichzeitig alle intelligenten Einheiten einer derartigen Produktionsmaschine. Dies erfordert andere Vorgehensweisen als im normalen IT-Betrieb. Insbesondere muss nicht nur die einzelne intelligente Einheit in das bestehende Rechnernetz integriert werden, sondern es müssen zusätzlich auch die Beziehungen innerhalb der Gruppe erhalten bleiben.

Im Stand der Technik werden derartige Produktionsmaschinen mittels eines einzigen Engineering-Projekts programmiert. Es entstehen Serienmaschinen mit gleichen internen IP-Adressen und einer lokalen Bedienerschnittstelle. Das Engineering-Projekt vergibt die IP-Adressen an alle beteiligten intelligenten Einheiten aus einem vorkonfigurierten Pool von IP-Adressen. Alternativ vergibt das Engineering-Projekt die IP-Adressen für eine Konfiguration mit einer virtuellen Bedienerschnittstelle.

Oftmals sollen die Produktionsmaschinen weiterhin über ein Rechnernetz mit einer für die Produktionsmaschinen einheitlichen, übergreifenden übergeordneten Einrichtung kommunizieren. Um eine derartige Kommunikation zu ermöglichen, müssen die IP-Adressen der Produktionsmaschinen angepasst werden.

Dies betrifft sowohl die IP-Adressen der internen intelligenten Einheiten der jeweiligen Produktionsmaschine als auch die IP-Adressen der externen intelligenten Einheiten, die der betreffenden Produktionsmaschinen zugeordnet sind, insbesondere die virtuelle Bedienerschnittstelle. Im Stand der Technik wird diese Anpassung oftmals manuell durchgeführt. Die Anpassung erfordert daher einen hohen Arbeitsaufwand und ist fehleranfällig. Es sind jedoch auch bereits Werkzeuge bekannt, mittels derer IP-Adressen von internen intelligenten Einheiten gruppenweise geändert werden können. Diese Werkzeuge sind maschinenbezogen. Virtuelle intelligente Einheiten können von ihnen nicht erfasst werden.

Der manuelle Vorgang kann prinzipiell automatisiert werden. Allerdings ist es hierfür erforderlich, dass der Hersteller der Produktionsmaschine über das entsprechende umfangreiche IP- und Virtualisierungs-Know-how verfügt. Wird weiterhin die Produktionsmaschine bei unterschiedlichen Kunden in unterschiedlichen Virtualisierungsumgebungen verbaut, so benötigt der Maschinenbauer das Know-how für alle Virtualisierungsumgebungen. Die Kernkompetenz des Maschinenbauers liegt hingegen naturgemäß auf dem Bau der Produktionsmaschinen, nicht auf Virtualisierungslösungen.

Im laufenden Betrieb der Produktionsmaschinen erfolgt regelmäßig auch ein Backup. Hierfür werden verschiedene Konzepte verwendet. Die Archivierung von erfassten Daten und von abzuarbeitenden Programmen kann auf verschiedene Art und Weise ausgestaltet sein.

In der Praxis sind, wie bereits erwähnt, in ein und demselben Industriebetrieb oftmals eine Vielzahl von automatisierten Produktionsmaschinen vorhanden. Hierbei wird oftmals für mehrere - vorzugsweise alle - Produktionsmaschinen jeweils eine virtuelle Bedienerschnittstelle realisiert. Weiterhin kommunizieren die Produktionsmaschinen über ein Rechnernetz mit einer übergeordneten Einrichtung. Beispielsweise erhalten sie von der übergeordneten Einrichtung Produktionsaufträge oder übermitteln Vollzugsmeldungen oder auftretende Fehler an die übergeordnete Einrichtung. Auch die Wartung und Instandhaltung ist oftmals vereinfacht. Die virtuellen Bedienerschnittstellen können beispielsweise in einem Rechner-Cluster implementiert werden.

Im Gegenzug ist jedoch die Inbetriebsetzung einer weiteren Produktionsmaschine und vor allem deren Integration in das bereits bestehende Rechnernetz schwierig. Insbesondere bereitet es erhebliche Schwierigkeiten, eine neue, zusätzliche Produktionsmaschine in das bestehende Rechnernetz, über das die bereits laufenden Produktionsmaschinen ihre Kommunikation abwickeln, aufzunehmen und in diesem Rechnernetz in Betrieb zu setzen und gleichzeitig zuverlässig zu gewährleisten, dass eventuelle Störungen und sonstige Probleme bei der Inbetriebsetzung die normale Kommunikation der bereits laufenden Produktionsmaschinen nicht beeinflussen. Es wäre daher von Vorteil, eine weitere Produktionsmaschine zunächst zwar in einen bestehenden Verbund aufnehmen zu können, dort aber isoliert betreiben zu können und erst später - nach erfolgreicher Inbetriebsetzung - vollständig in das bestehende Rechnernetz zu integrieren und einzugliedern.

Aus der EP 2 955 904 A1 ist ein Verfahren zur Vergabe von Netzwerkadressen für Netzteilnehmer eines segmentierten Netzes mit mehreren Subnetzen bekannt, die jeweils über einen Subnetz-Router an ein sie verbindendes Sammelnetz angeschlossen sind, wobei von den Subnetz-Routern durch einen Austausch von über das Sammelnetz verteilten Router-Nachrichten dezentral ein gemeinsamer Adressbereich ermittelt wird und innerhalb des Adressbereichs Netzwerkadressen für die Netzteilnehmer festgelegt werden.

Aus der US 2008/065243 A1 ist ein Verfahren zum Abrufen und Anzeigen technischer Daten für eine Industrieeinrichtung unter Verwendung eines Computerprogramms zur Steuerung bekannt, wobei mindestens eine Rechnereinheit einen Prozess ausführt, der mit dem Steuerungsprogramm zumindest teilweise vereinbar ist, wobei das Steuerungsprogramm ein so eingerichtetes graphisches Benutzerinterface umfasst, das eine Instruktion erzeugt werden kann, um die technischen Daten bezüglich einer oder mehrerer Industrieeinrichtungen abzurufen. Dabei werden die technischen Daten über ein Datennetzwerk übertragen.

Aus der EP 2 506 503 A1 ist ein Verfahren zum Empfang von Daten durch eine Leitsystemkomponente in einem Automatisierungsnetzwerk bekannt, das die folgenden Schritte umfasst:
- Einrichtung mehrerer Tunnel zu Netzwerkgeräten eines Teilnetzwerks des Automatisierungsnetzwerks in der Leitsystemkomponente, wobei jeder Tunnel einen ersten Endpunkt in der Leitsystemkomponente und einen zweiten Endpunkt in genau einem der Netzwerkgeräte umfasst,
- Zuordnung jedes Tunnels zu dem an diesen Tunnel angeschlossenen Netzwerkgerät unter Verwendung zumindest einer Adresse dieses Netzwerkgeräts,
- Empfang von Daten mittels eines ersten Protokolls innerhalb einer Datenstruktur des ersten Protokolls durch die Tunnel, wobei das erste Protokoll ein Routing der Daten in dem Automatisierungsnetzwerk ermöglicht,
- Entpacken der Daten aus der Datenstruktur, wobei die Daten nach dem Entpacken keine Routinginformationen für ein Routing in dem Netzwerk umfassen.

Die Aufgabe der vorliegenden Erfindung besteht darin, Möglichkeiten zu schaffen, welche eine derartige Prozessabfolge - also zuerst die Aufnahme in das bestehende Rechnernetz, danach die Inbetriebsetzung über das Rechnernetz ohne die Gefahr von negativen Rückwirkungen auf die bereits über das Rechnernetz kommunizierenden Produktionsmaschinen und schließlich die volle Einbindung in die Kommunikationsstruktur - realisieren.

Die Aufgabe wird durch ein Betriebsverfahren für ein Rechnernetz mit den Merkmalen des Anspruchs 1 gelöst. Vorteilhafte Ausgestaltungen des Betriebsverfahrens sind Gegenstand der abhängigen Ansprüche 2 bis 13.

Erfindungsgemäß wird ein Betriebsverfahren für ein Rechnernetz, das eine Vielzahl von Anschlüssen aufweist, dadurch ausgestaltet,
- dass eine Anzahl von an einen Teil der Anschlüsse angeschlossenen Produktionsmaschinen über das Rechnernetz jeweils zumindest mit einer der jeweiligen Produktionsmaschine zugeordneten virtuellen Bedienerschnittstelle kommuniziert,
- dass die Produktionsmaschinen über das Rechnernetz weiterhin mit einer übergeordneten Einrichtung kommunizieren,
- dass die virtuellen Bedienerschnittstellen und die übergeordnete Einrichtung außerhalb der Produktionsmaschinen angeordnet sind,
- dass eine Überwachungskomponente vorbestimmte der Anschlüsse des Rechnernetzes auf das Anschließen einer weiteren Produktionsmaschine überwacht,
- dass immer dann, wenn die Überwachungskomponente das Anschließen der weiteren Produktionsmaschine an einen beliebigen der vorbestimmten Anschlüsse des Rechnernetzes erkennt, automatisch ein Inbetriebnahmedienst aktiviert wird,
- dass der Inbetriebnahmedienst aufgrund der Aktivierung automatisch zumindest
   -- der weiteren Produktionsmaschine eine virtuelle Bedienerschnittstelle zuordnet,
   -- innerhalb des Rechnernetzes ein eigenes virtuelles Rechnernetz neu einrichtet und
   -- die weitere Produktionsmaschine mit der ihr zugeordneten virtuellen Bedienerschnittstelle über das neu eingerichtete virtuelle Rechnernetz verbindet,
   so dass eine von anderen über das Rechnernetz erfolgenden Kommunikationen isolierte Kommunikation der weiteren Produktionsmaschine mit der ihr zugeordneten virtuellen Bedienerschnittstelle implementiert wird,
- dass die isolierte Kommunikation der weiteren Produktionsmaschine mit der ihr zugeordneten virtuellen Bedienerschnittstelle beibehalten wird, bis von einer Bedienperson ein Freigabebefehl vorgegeben wird,
- dass aufgrund der Vorgabe des Freigabebefehls ein Integrationsdienst aktiviert wird und
- dass der Integrationsdienst aufgrund der Aktivierung automatisch
   -- zumindest einen virtuellen Router neu einrichtet,
   -- den neu eingerichteten virtuellen Router über das neu eingerichtete virtuelle Rechnernetz mit der weiteren Produktionsmaschine verbindet und
   -- den neu eingerichteten virtuellen Router konfiguriert, so dass die weitere Produktionsmaschine über den neu eingerichteten virtuellen Router mit der übergeordneten Einrichtung kommuniziert.

Es ist möglich, dass alle Anschlüsse des Rechnernetzes vorbestimmte Anschlüsse sind, also von der Überwachungskomponente auf das Anschließen einer weiteren Produktionsmaschine überwacht werden. Vorzugsweise sind jedoch nur einige der Anschlüsse vorbestimmte Anschlüsse. Unabhängig davon kann jedoch die weitere Produktionsmaschine an jeden beliebigen der vorbestimmten Anschlüsse angeschlossen werden. Es ist also nicht vorab festgelegt, an welchen der Anschlüsse die weitere Produktionsmaschine angeschlossen wird. Es kann jeder freie vorbestimmte Anschluss verwendet werden.

Es ist möglich, dass bereits vorab festgelegt ist, welche der Anschlüsse vorbestimmte Anschlüsse sind. Vorzugsweise kann diese Festlegung jedoch von einer Bedienperson getroffen werden. Insbesondere kann der Überwachungskomponente somit während der Abarbeitung des Betriebsverfahrens (beispielsweise beim Hochlauf) von der Bedienperson vorgegeben werden, welche der Anschlüsse des Rechnernetzes vorbestimmte Anschlüsse sind. Beispielsweise können auf einem Bildschirm über eine Maske die vorhandenen Anschlüsse angezeigt werden. Der Bedienperson kann in diesem Fall die Möglichkeit geboten werden, die vorbestimmten Anschlüsse durch Selektieren festzulegen.

Unter dem Begriff "virtuelle Bedienerschnittstelle" ist im Sinne der vorliegenden Erfindung nicht ein einfaches sogenanntes "remote display" gemeint, sondern eine Bedienerschnittstelle, welche insbesondere die sogenannte business logic mit umfasst. Die virtuelle Bedienerschnittstelle führt also - jeweils zumindest teilweise - eine Aufbereitung der über die Eingabeeinrichtung der Produktionsmaschine eingegebenen Eingaben und eine Aufbereitung der über die Anzeige der Produktionsmaschine auszugebenden Ausgaben durch. Ein Beispiel einer Aufbereitung von Eingaben ist die Prüfung einer Verriegelung einer bestimmten Tastenbetätigung oder die Prüfung, ob eine Tastenbetätigung sich geändert hat (also der Übergang von betätigt zu unbetätigt oder umgekehrt. Ein Beispiel einer Aufbereitung von Ausgaben ist die Art und Weise, wie bestimmte Ausgaben dargestellt werden sollen.

Es ist möglich, dass der Inbetriebnahmedienst im Rahmen der Zuordnung der virtuellen Bedienerschnittstelle zu der weiteren Produktionsmaschine diese virtuelle Bedienerschnittstelle neu einrichtet. Die virtuelle Bedienerschnittstelle ist jedoch oftmals ein und dieselbe für mehrere Produktionsmaschinen. Alternativ ist es daher ebenso möglich und in vielen Fällen sogar zu bevorzugen, dass der Inbetriebnahmedienst im Rahmen der Zuordnung der virtuellen Bedienerschnittstelle zu der weiteren Produktionsmaschine eine bereits eingerichtete virtuelle Bedienerschnittstelle für die weitere Produktionsmaschine freischaltet. In diesem Fall wird für die betreffende virtuelle Bedienerschnittstelle lediglich vermerkt, dass sie bei entsprechender Anwahl mit der weiteren Produktionsmaschine kommunizieren soll. Ferner wird in diesem Fall der bereits eingerichteten virtuellen Bedienerschnittstelle mitgeteilt, welches virtuelle Rechnernetz für diese Kommunikation verwendet werden soll. Analoge Vorgehensweisen sind möglich, wenn eine bereits bestehende virtuelle Bedienerschnittstelle nur noch instanziiert werden muss.

Zum Einrichten der virtuellen Bedienerschnittstelle muss dem Inbetriebnahmedienst eine Konfiguration der virtuellen Bedienerschnittstelle bekannt sein. Es ist möglich, dass der Inbetriebnahmedienst diese Konfiguration von der Bedienperson oder von der weiteren Produktionsmaschine entgegennimmt. Alternativ ist es möglich, dass der Inbetriebnahmedienst von der weiteren Produktionsmaschine lediglich einen Link entgegennimmt (beispielsweise aktiv abfragt) und die Konfiguration der virtuellen Bedienerschnittstelle über den Link herunterlädt. Auch in diesem Fall kann der Inbetriebnahmedienst die virtuelle Bedienerschnittstelle basierend auf der Konfiguration einrichten oder freischalten oder instanziieren.

In manchen Fällen erfolgt ausschließlich eine Kommunikation der weiteren Produktionsmaschine mit der zugeordneten virtuellen Bedienerschnittstelle. In vielen Fällen bindet der Inbetriebnahmedienst jedoch aufgrund der Aktivierung automatisch zusätzlich auch einen Speicher und/oder eine Datenbank in das neu eingerichtete virtuelle Rechnernetz ein.

Das Rechnernetz weist eine Topologie von Verteilerknoten auf. Vorzugsweise ist dem Inbetriebnahmedienst diese Topologie bekannt. Denn insbesondere kann der Inbetriebnahmedienst in diesem Fall zum Implementieren des neu eingerichteten virtuellen Rechnernetzes die Verteilerknoten entsprechend konfigurieren.

Zum Einrichten des virtuellen Routers ist es beispielsweise möglich, dass der Integrationsdienst eine virtuelle Netzwerckarte zu dem neu eingerichteten virtuellen Rechnernetz und eine virtuelle Netzwerkkarte zu der übergeordneten Einrichtung implementiert und konfiguriert, so dass die weitere Produktionsmaschine über das neu eingerichtete virtuelle Rechnernetz, die virtuelle Netzwerkkarte zu dem neu eingerichteten virtuellen Rechnernetz und die virtuelle Netzwerkkarte zu der übergeordneten Einrichtung mit der übergeordneten Einrichtung kommuniziert. Durch diese Ausgestaltung lässt sich die Kommunikation mit der übergeordneten Einrichtung besonders einfach realisieren.

In manchen Fällen kann es weiterhin sinnvoll sein, nach der vollständigen Integration und Eingliederung einer Produktionsmaschine die Produktionsmaschine wieder zu isolieren. Beispielsweise kann dies sinnvoll sein, wenn im späteren Betrieb der Produktionsmaschine Probleme auftreten oder wenn die Produktionsmaschine an einen anderen Standort verlagert werden soll. In einer bevorzugten Ausgestaltung des Betriebsverfahrens ist es daher möglich, dass aufgrund der Vorgabe eines Ausgliederungsbefehls durch die Bedienperson ein Ausgliederungsdienst aktiviert wird und dass der Ausgliederungsdienst aufgrund der Aktivierung automatisch den zuvor eingerichteten virtuellen Router von der übergeordneten Einrichtung trennt. Die Trennung kann bei Bedarf später wieder rückgängig gemacht werden.

Im einfachsten Fall erfolgt lediglich die Trennung des virtuellen Routers. Der virtuelle Router als solcher wird beibehalten. Alternativ ist es jedoch ebenso möglich, dass der Ausgliederungsdienst den zuvor eingerichteten virtuellen Router auflöst.

Das Auflösen des virtuellen Routers kann insbesondere dann von Vorteil sein, wenn der Ausgliederungsdienst nach dem Trennen des virtuellen Routers von der übergeordneten Einrichtung aufgrund eines Auflösungsbefehls durch die Bedienperson zusätzlich die der weiteren Produktionsmaschine zugeordnete virtuelle Bedienerschnittstelle von der weiteren Produktionsmaschine trennt. Im einfachsten Fall erfolgt nur die Trennung der entsprechenden virtuellen Bedienerschnittstelle von der weiteren Produktionsmaschine. Alternativ kann der Ausgliederungsdienst aufgrund des Auflösungsbefehls zusätzlich auch das entsprechende virtuelle Rechnernetz auflösen.

Zur Koordinierung der Überwachungskomponente, des Inbetriebnahmedienstes und des Integrationsdienstes wird vorzugsweise ein Lebensphasenkonfigurationsmodul implementiert. In diesem Fall ist es insbesondere möglich,
- dass die Überwachungskomponente das Erkennen des Anschließens der weiteren Produktionsmaschine an einen der vorbestimmten Anschlüsse des Rechnernetzes an das Lebensphasenkonfigurationsmodul meldet,
- dass der Inbetriebnahmedienst von dem Lebensphasenkonfigurationsmodul aktiviert wird,
- dass das Lebensphasenkonfigurationsmodul den Freigabebefehl von der Bedienperson entgegennimmt und
- dass der Integrationsdienst von dem Lebensphasenkonfigurationsmodul aktiviert wird.

Falls der Auflösungsdienst vorhanden ist, nimmt das Lebensphasenkonfigurationsmodul von der Bedienperson vorzugsweise auch den Ausgliederungsbefehl und gegebenenfalls auch den Auflösungsbefehl entgegen und aktiviert den Ausgliederungsdienst entsprechend.

Die Aufgabe wird weiterhin durch ein Computerprogramm mit den Merkmalen des Anspruchs 14 gelöst. Erfindungsgemäß bewirkt die Abarbeitung des Maschinencodes durch die Verwaltungskomponente, dass die Verwaltungskomponente das Rechnernetz gemäß einem erfindungsgemäßen Betriebsverfahren betreibt.

Die Aufgabe wird weiterhin durch eine Verwaltungskomponente eines Rechnernetzes mit den Merkmalen des Anspruchs 15 gelöst. Erfindungsgemäß ist die Verwaltungskomponente mit einem erfindungsgemäßen Computerprogramm programmiert ist, so dass sie aufgrund der Abarbeitung des Maschinencodes des Computerprogramms das Rechnernetz gemäß einem erfindungsgemäßen Betriebsverfahren betreibt.

Die Aufgabe wird weiterhin durch ein Rechnernetz mit den Merkmalen des Anspruchs 16 gelöst. Erfindungsgemäß weist das Rechnernetz eine erfindungsgemäße Verwaltungskomponente auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Rechnernetz und an das Rechnernetz angeschlossene Komponenten,
- FIG 2: das Rechnernetz von FIG 1 und eine Verwaltungskomponente,
- FIG 3: ein Ablaufdiagramm,
- FIG 4: eine Maske,
- FIG 5: ein Ablaufdiagramm,
- FIG 6: einen Teil des Rechnernetzes und
- FIG 7: ein Ablaufdiagramm.

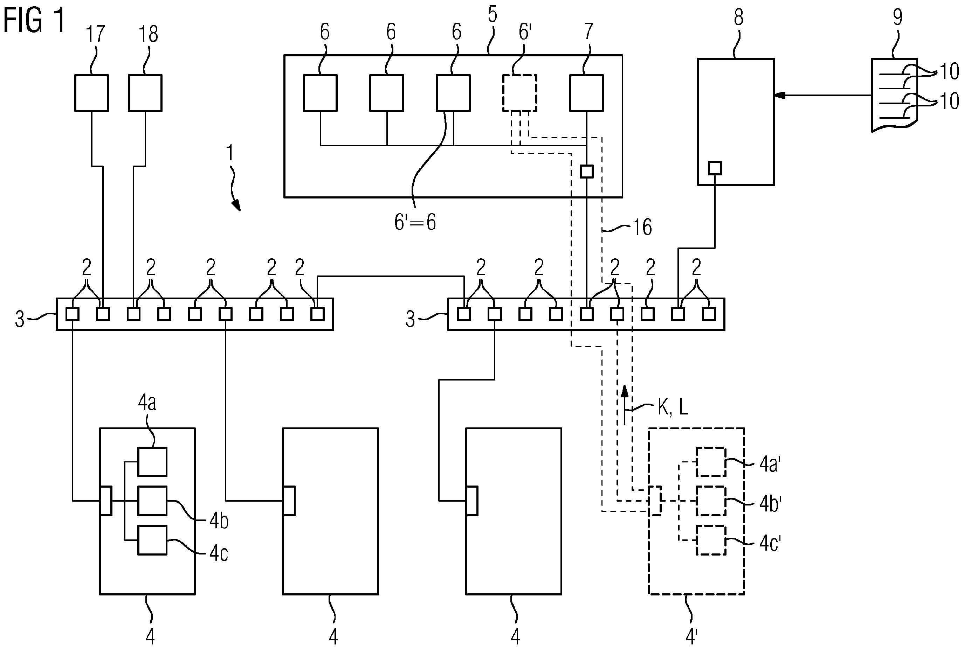

Gemäß FIG 1 weist ein Rechnernetz 1 - beispielsweise ein LAN (= local area network) - eine Vielzahl von Anschlüssen 2 auf. Die Anschlüsse 2 können beispielsweise in einer Anzahl von Switches 3 gruppiert sein. Die Anzahl an Switches 3 beträgt minimal 1. Es können jedoch auch mehrere Switches 3 vorhanden sein. Die Switches 3 können physikalische Switches oder virtuelle Switches sein. An einige der Anschlüsse 2 sind Produktionsmaschinen 4 angeschlossen. Andere der Anschlüsse 2 sind - zumindest zunächst - noch nicht belegt. An einen weiteren Anschluss 2 ist ein weiterer Rechner 5 angeschlossen.

Die Produktionsmaschinen 4 sind - zumindest aus Sicht des Rechnernetzes 1 - untereinander baugleich bzw. zumindest gleichartig. Gleichartig bedeutet hierbei, dass jede Produktionsmaschine 4 zumindest ein Steuergerät 4a, eine Sensor-/ Aktor-Schnittstelle 4b und eine lokale Bedienerschnittstelle 4c (zeroTerminal) umfasst und dass diese intelligenten Einheiten 4a, 4b, 4c über das Rechnernetz 1 jeweils zumindest mit einer virtuellen Bedienerschnittstelle 6 (vHMI = virtual human machine interface) kommunizieren, die der jeweiligen Produktionsmaschine 4 zugeordnet ist. Das Steuergerät 4a, die Sensor-/Aktor-Schnittstelle 4b und die lokale Bedienerschnittstelle 4c sind in FIG 1 aus Gründen der Übersichtlichkeit nur für eine der Produktionsmaschinen 4 dargestellt. Sie sind aber bei jeder Produktionsmaschine 4 vorhanden. Das Steuergerät 4a ist die Logik, welche die Produktionsmaschine 4 steuert. Die Sensor-/Aktor-Schnittstelle 4b ist die Schnittstelle, über welche Signale von Sensoren der Produktionsmaschine 4 eingelesen werden und Befehle an Aktoren der Produktionsmaschine 4 ausgegeben werden. Die lokale Bedienerschnittstelle 4c dient der Kommunikation mit einem Anwender (in FIG 1 nicht dargestellt). Die lokale Bedienerschnittstelle 4c umfasst insbesondere eine Anzeige und eine Eingabeeinrichtung wie beispielsweise eine Tastatur oder einen mit der Anzeige kombinierten Touchscreen oder dergleichen. Die lokale Bedienerschnittstelle 4c nimmt jedoch im Wesentlichen lediglich noch vom Anwender dessen Eingaben entgegen und gibt Ausgaben an den Anwender aus. Die weitergehende Aufbereitung von Daten erfolgt hingegen durch die virtuelle Bedienerschnittstelle 6. Die virtuelle Bedienerschnittstelle 6 umfasst insbesondere die sogenannte business logic. Die virtuelle Bedienerschnittstelle 6 führt also - vollständig oder zumindest teilweise - die Vorverarbeitung und Aufbereitung von über die Eingabeeinrichtung der lokalen Bedienerschnittstelle 4c vorgenommenen Eingaben und auch die Vorverarbeitung und Aufbereitung von über die Anzeige auszugebenden Ausgaben durch. Wenn nachfolgend von einer Kommunikation der Produktionsmaschinen 4 die Rede ist, ist stets die Kommunikation mindestens einer dieser intelligenten Einheiten 4a, 4b, 4c mit der der jeweiligen Produktionsmaschine 4 zugeordneten virtuellen Bedienerschnittstelle 6 oder einer anderen der jeweiligen Produktionsmaschine 4 zugeordneten Einheit gemeint.

Die jeweilige virtuelle Bedienerschnittstelle 6 kann beispielsweise entsprechend der Darstellung in FIG 1 für einige oder alle der Produktionsmaschinen 4 innerhalb des weiteren Rechners 5 implementiert sein. In diesem Fall werden die virtuellen Bedienerschnittstellen 6 durch eine entsprechende Programmierung des weiteren Rechners 5 realisiert. Die Bedienerschnittstellen 6 können jedoch auch anderweitig implementiert sein. Die Produktionsmaschinen 4 kommunizieren über das Rechnernetz 1 weiterhin mit einer übergeordneten Einrichtung 7. Die übergeordnete Einrichtung 4 kann entsprechend der Darstellung in FIG 1 ebenfalls innerhalb des weiteren Rechners 5 implementiert sein. Die übergeordnete Einrichtung 7 wird in diesem Fall durch eine entsprechende Programmierung des weiteren Rechners 5 realisiert. Die übergeordnete Einrichtung 7 kann jedoch auch anderweitig implementiert sein. Entscheidend ist, dass die virtuellen Bedienerschnittstellen 6 und die übergeordnete Einrichtung 7 außerhalb der Produktionsmaschinen 4 angeordnet sind, dass also zur Kommunikation der Produktionsmaschinen mit den virtuellen Bedienerschnittstellen 6 und der übergeordneten Einrichtung 7 eine Nutzung des Rechnernetzes 1 erforderlich ist.

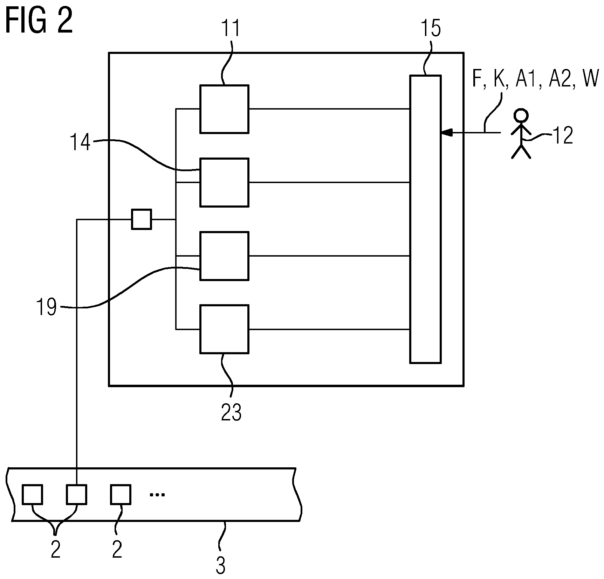

Das Rechnernetz 1 weist weiterhin eine Verwaltungskomponente 8 auf. Auch die Verwaltungskomponente 8 ist über einen der Anschlüsse 2 an das Rechnernetz 1 angeschlossen. Sie kann gegebenenfalls innerhalb des weiteren Rechners 5 implementiert sein. Unabhängig davon, ob die Verwaltungskomponente 8 innerhalb oder außerhalb des weiteren Rechners 5 realisiert ist, ist die Verwaltungskomponente 8 mit einem Computerprogramm 9 programmiert. Das Computerprogramm 9 umfasst Maschinencode 10, der von der Verwaltungskomponente 8 unmittelbar abarbeitbar ist. Die Abarbeitung des Maschinencodes 10 durch die Verwaltungskomponente 8 bewirkt, dass die Verwaltungskomponente 8 das Rechnernetz 1 gemäß einem Betriebsverfahren betreibt, das nachstehend in Verbindung mit FIG 2 und den weiteren FIG näher erläutert wird.

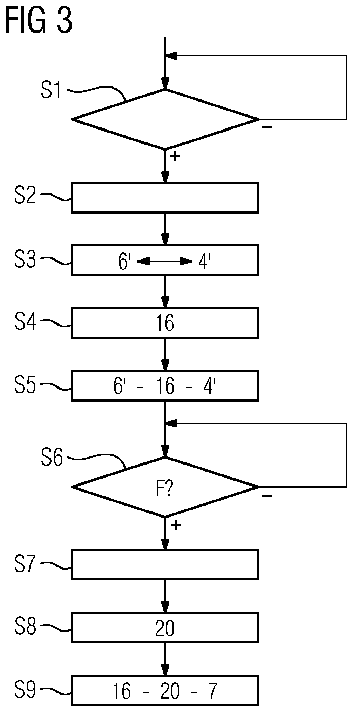

Im Rahmen der Abarbeitung des Maschinencodes 10 implementiert die Verwaltungskomponente 8 eine Überwachungskomponente 11 (siehe FIG 2). Die Überwachungskomponente 11 kann als Softwareblock realisiert sein. Gemäß FIG 3 überwacht die Überwachungskomponente 11 in einem Schritt S1 vorbestimmte der Anschlüsse 2 des Rechnernetzes 1 auf das Anschließen einer weiteren Produktionsmaschine. Die weitere Produktionsmaschine wird nachfolgend zur Unterscheidung von den bereits an das Rechnernetz 1 angeschlossenen Produktionsmaschinen 4 mit dem Bezugszeichen 4' versehen. Sie ist in FIG 1 gestrichelt dargestellt. Die Überwachungskomponente 11 führt den Schritt S1 wiederholt aus, bis sie das Anschließen der weiteren Produktionsmaschine 4' erkennt. Hierbei kommt es jedoch nicht darauf an, ob die weitere Produktionsmaschine 4' an einen ganz bestimmten Anschluss 2 des Rechnernetzes 1 angeschlossen wird. Entscheidend ist lediglich, dass es sich überhaupt um einen (also irgendeinen) der vorbestimmten Anschlüsse 2 des Rechnernetzes 1 handelt.

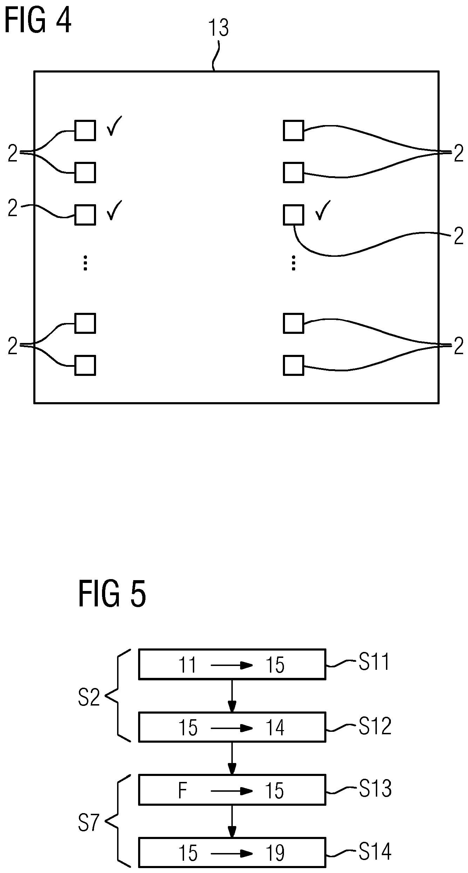

Es ist möglich, dass die Überwachungskomponente 11 alle Anschlüsse 2 des Rechnernetzes 1 entsprechend überwacht. Vorzugsweise wird jedoch nur ein Teil der Anschlüsse 2 des Rechnernetzes 1 überwacht. Insbesondere können entsprechend der Darstellung in FIG 4 einer Bedienperson 12 beispielsweise über eine Maske 13 die vorhandenen Anschlüsse 2 über einen Bildschirm oder ein ähnliches Sichtgerät angezeigt werden. In diesem Fall kann die Bedienperson 12, wie in FIG 4 beispielhaft durch Häkchen angedeutet, durch entsprechende Auswahl von ihr gewünschte Anschlüsse 2 der Überwachungskomponente 11 vorgeben, welche der Anschlüsse 2 des Rechnernetzes 1 von ihr überwacht werden sollen.

Nach dem Erkennen eines derartigen Anschließens geht die Überwachungskomponente 11 zu einem Schritt S2 über. Im Schritt S2 wird - direkt oder indirekt, in jedem Fall aber automatisch - ein Inbetriebnahmedienst 14 aktiviert. Beispielsweise kann die Verwaltungskomponente 8 aufgrund der Abarbeitung des Maschinencodes 10 entsprechend der Darstellung in FIG 2 ein Lebensphasenkonfigurationsmodul 15 implementieren. In diesem Fall kann die Überwachungskomponente 11 gemäß FIG 5 als Teilimplementierung des Schrittes S2 in einem Schritt S11 das Erkennen des Anschließens der weiteren Produktionsmaschine 4' an das Lebensphasenkonfigurationsmodul 15 melden. Das Lebensphasenkonfigurationsmodul 15 kann daraufhin in einem Schritt S12 den Inbetriebnahmedienst 14 aktivieren. Der Schritt S12 vervollständigt somit den Schritt S2 von FIG 3.

Der Inbetriebnahmedienst 14 führt aufgrund seiner Aktivierung seinerseits automatisch mehrere Tätigkeiten aus. Zunächst ordnet er in einem Schritt S3 der weiteren Produktionsmaschine 4' eine virtuelle Bedienerschnittstelle zu. Diese virtuelle Bedienerschnittstelle wird nachfolgend als weitere virtuelle Bedienerschnittstelle bezeichnet und zur Unterscheidung von den bereits bestehenden virtuellen Bedienerschnittstellen 6 mit dem Bezugszeichen 6' versehen.

Im Rahmen der Zuordnung der weiteren virtuellen Bedienerschnittstelle 6' zu der weiteren Produktionsmaschine 4' kann der Inbetriebnahmedienst 14 beispielsweise die weitere virtuelle Bedienerschnittstelle 6' neu einrichten. Diese Möglichkeit ist in FIG 1 durch eine gestrichelte Darstellung der weiteren virtuellen Bedienerschnittstelle 6' angedeutet. Alternativ kann der Inbetriebnahmedienst 14 eine bereits eingerichtete virtuelle Bedienerschnittstelle 6 für die weitere Produktionsmaschine freischalten. Dies ist in FIG 1 durch eine Gleichsetzung (6' = 6) der weiteren virtuellen Bedienerschnittstelle 6' mit einer bereits bestehenden virtuellen Bedienerschnittstelle 6 angedeutet. Auch andere Arten der Einrichtung, beispielsweise durch Instanziieren, sind möglich.

Die Konfiguration K der weiteren virtuellen Bedienerschnittstelle 6' muss dem Inbetriebnahmedienst 14 bekannt sein. Zu diesem Zweck kann der Inbetriebnahmedienst 14 die Konfiguration K von der Bedienperson 12 entgegennehmen. Alternativ kann der Inbetriebnahmedienst 14 die Konfiguration K von der weiteren Produktionsmaschine 4' entgegennehmen. Wiederum alternativ kann der Inbetriebnahmedienst 14 von der weiteren Produktionsmaschine 4' einen Link L entgegennehmen und sodann die Konfiguration K über den Link L herunterladen. Unabhängig von der Art und Weise, auf welche die Konfiguration K dem Inbetriebnahmedienst 14 bekannt wird, richtet der Inbetriebnahmedienst 14 die weitere virtuelle Bedienerschnittstelle 6' jedoch basierend auf der Konfiguration K ein bzw. schaltet sie basierend auf der Konfiguration K frei bzw. instanziiert sie entsprechend.

Weiterhin richtet der Inbetriebnahmedienst 14 in einem Schritt S4 innerhalb des Rechnernetzes 1 ein eigenes virtuelles Rechnernetz 16 (also ein vLAN = virtual local area network) neu ein. Der Inbetriebnahmedienst 14 ordnet dem virtuellen Rechnernetz 16 im Rahmen der Einrichtung insbesondere einen Identifikator zu. Beispielsweise kann dem Inbetriebnahmedienst 14 eine Topologie von Verteilerknoten 3 (= Switches 3) des Rechnernetzes 1 bekannt sein. Der Inbetriebnahmedienst 14 kann daher die Verteilerknoten 3 adressieren und entsprechend konfigurieren (insbesondere diesen den Identifikator mitteilen) und dadurch das virtuelle Rechnernetz 16 einrichten. Die zu ergreifenden Maßnahmen sind dem Fachmann als solche bekannt.

Nach dem Einrichten des virtuellen Rechnernetzes 16 als solchem verbindet der Inbetriebnahmedienst 14 in einem Schritt S5 die weitere Produktionsmaschine 4' mit der ihr zugeordneten virtuellen Bedienerschnittstelle 6' über das neu eingerichtete virtuelle Rechnernetz 16. Insbesondere konfiguriert der Inbetriebnahmedienst 14 die weitere virtuelle Bedienerschnittstelle 6' sowie alle intelligenten Einheiten der weiteren Produktionsmaschine 4', die über das virtuelle Rechnernetz 16 miteinander kommunizieren sollen, entsprechend. Die intelligenten Einheiten der weiteren Produktionsmaschine 4' sind insbesondere deren Steuergerät 4a', deren Sensor-/Aktor-Schnittstelle 4b' und deren lokale Bedienerschnittstelle 4c'.

Zum Konfigurieren teilt der Inbetriebnahmedienst 14 beispielsweise auch der weiteren virtuellen Bedienerschnittstelle 6' und allen entsprechenden intelligenten Einheiten 4a', 4b', 4c' der weiteren Produktionsmaschine 4' den Identifikator des virtuellen Rechnernetzes 16 mit. Soweit eine Kommunikation der weiteren Produktionsmaschine 4' und/oder der weiteren virtuellen Bedienerschnittstelle 6' auch mit anderen Einheiten gewünscht ist - beispielsweise einem Speicher 17 und/oder einer Datenbank 18 - bindet der Inbetriebnahmedienst 14 aufgrund seiner Aktivierung zusätzlich auch diese Einheiten 17, 18 in das neu eingerichtete virtuelle Rechnernetz 16 ein. Dies ist in FIG 1 nicht mit dargestellt. Welche Einheiten im einzelnen in das neu eingerichtete virtuelle Rechnernetz 16 eingebunden werden sollen, müssen dem Inbetriebnahmedienst 14 zuvor selbstverständlich bekannt gemacht worden sein.

Aufgrund der Kommunikation über das eigens für die weitere Produktionsmaschine 4' eingerichtete virtuelle Rechnernetz 16 wird somit eine Kommunikation der weiteren Produktionsmaschine 4' mit der ihr zugeordneten virtuellen Bedienerschnittstelle 6' (und gegebenenfalls den weiteren Einheiten 17, 18) implementiert, die von anderen über das Rechnernetz 1 erfolgenden Kommunikationen isoliert ist.

Die isolierte Kommunikation der weiteren Produktionsmaschine 4' mit der ihr zugeordneten virtuellen Bedienerschnittstelle 6' (und gegebenenfalls den weiteren Einheiten 17, 18) wird zunächst beibehalten. Insbesondere wird in einem Schritt S6 abgewartet, bis von der Bedienperson 12 ein Freigabebefehl F vorgegeben wird. Sobald dies der Fall ist, wird aufgrund der Vorgabe des Freigabebefehls F in einem Schritt S7 - direkt oder indirekt, in jedem Fall aber automatisch - ein Integrationsdienst 19 aktiviert. Beispielsweise kann gemäß FIG 5 in einem Schritt S13 das Lebensphasenkonfigurationsmodul 13 den Freigabebefehl F entgegennehmen und sodann in einem Schritt S14 den Integrationsdienst 19 aktivieren.

Aufgrund der Aktivierung führt der Integrationsdienst 19 automatisch mehrere Tätigkeiten aus. Als Ergebnis dieser Tätigkeiten wird die - bezogen auf das Rechnernetz 1 - zuvor isoliert betriebene weitere Produktionsmaschine 4' in die Gesamtstruktur des Rechnernetzes 1 (einschließlich der Kommunikation mit der übergeordneten Einrichtung 7) integriert.

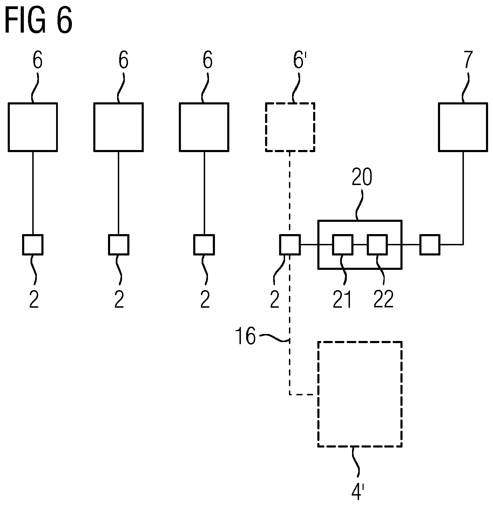

Im Rahmen seiner Tätigkeiten richtet der Integrationsdienst 19 in einem Schritt S8 einen virtuellen Router 20 (siehe FIG 6) neu ein. Beispielsweise kann der Integrationsdienst 19 zum Implementieren des virtuellen Routers 20 eine virtuelle Netzwerkkarte 21 zu dem neu eingerichteten virtuellen Rechnernetz 16 und eine virtuelle Netzwerkkarte 22 zu der übergeordneten Einrichtung 7 implementieren. Weiterhin verbindet der Integrationsdienst 19 in einem Schritt S9 den neu eingerichteten virtuellen Router 20 über das neu eingerichtete virtuelle Rechnernetz 16 mit der weiteren Produktionsmaschine 4'. Insbesondere kann der Integrationsdienst 19 die virtuelle Netzwerkkarte 21 zu dem neu eingerichteten virtuellen Rechnernetz 16 derart konfigurieren, dass diese virtuelle Netzwerkkarte 21 die Kommunikation zu dem neu eingerichteten virtuellen Rechnernetz 16 handhabt. Zu diesem Zweck kann beispielsweise der virtuellen Netzwerkkarte 21 zur weiteren Produktionsmaschine 4' eine IP-Adresse zugewiesen werden. Diese Adresse muss dem Integrationsdienst 19 vorab bekannt sein. Weiterhin konfiguriert der Integrationsdienst 19 den neu eingerichteten virtuellen Router 20 derart, dass die weitere Produktionsmaschine 4' über den neu eingerichteten virtuellen Router 20 mit der übergeordneten Einrichtung 7 kommuniziert. Insbesondere kann der Integrationsdienst 19 die virtuelle Netzwerckarte 22 zu der übergeordneten Einrichtung 7 derart konfigurieren, dass diese virtuelle Netzwerkkarte 22 die Kommunikation zu der übergeordneten Einrichtung 7 handhabt. Zu diesem Zweck kann beispielsweise der virtuellen Netzwerkkarte 22 eine prinzipiell beliebige IP-Adresse aus einem vorkonfigurierten Pool zugewiesen werden. Der Integrationsdienst 19 selektiert die IP-Adresse aus dem Pool und weist sie der virtuellen Netzwerkkarte 22 zu. Die Konfiguration von Routern - auch virtuellen Routern - ist Fachleuten bekannt.

Im Ergebnis erfolgt somit eine automatische Konfiguration des virtuellen Routers 20, so dass nach der Konfiguration des virtuellen Routers 20 die Kommunikation der weiteren Produktionsmaschine 4' mit der übergeordneten Einrichtung 7 von der weiteren Produktionsmaschine 4' über das neu eingerichtete virtuelle Rechnernetz 16, die virtuelle Netzwerkkarte 21 zu dem neu eingerichteten virtuellen Rechnernetz 16 und die virtuelle Netzwerkkarte 22 zu der übergeordneten Einrichtung 7. Innerhalb des Routers 20 erfolgt mittels der beiden virtuellen Netzwerkkarten 21, 22 die erforderliche Wandlung der IP-Adressen. Dieser Vorgang ist Fachleuten allgemein vertraut. Soweit erforderlich, kann die Funktionalität des virtuellen Routers 20 während der Laufzeit angepasst werden.

Vorzugsweise stellt der Inbetriebnahmedienst 14 weiterhin über einen der Anschlüsse 2 einen direkten Zugriff auf die weitere Produktionsmaschine 4' zur Verfügung. Beispielsweise kann der Inbetriebnahmedienst 14 ermitteln, welche der Anschlüsse 2 nicht belegt sind, der Bedienperson 12 die nicht belegten Anschlüsse 2 zur Auswahl anbieten und dann einen von der Bedienperson 12 selektierten Anschluss 2 in das virtuelle Rechnernetz 16 integrieren. Gegebenenfalls kann der Inbetriebnahmedienst 14 auch ein weiteres virtuelles Rechnernetz (nicht dargestellt) einrichten, in das er nur die intelligenten Einheiten 4a', 4b', 4c' der weiteren Produktionsmaschine 4', aber nicht die zugeordnete virtuelle Bedienerschnittstelle 6' einbindet. In diesem Fall ist von dem entsprechenden Anschluss 2 ein direkter Zugriff auf die intelligenten Einheiten 4a', 4b', 4c' der weiteren Produktionsmaschine 4' möglich.

Es ist möglich, dass der Zugriff auf die weitere Produktionsmaschine 4' über den genannten Anschluss 2 auch nach dem Einrichten der Kommunikation der weiteren Produktionsmaschine 4' mit der übergeordneten Einrichtung 7 aufrechterhalten wird. Vorzugsweise bleibt dieser Zugriff jedoch nur so lange aufrechterhalten, bis die weitere Produktionsmaschine 4' mittels des Integrationsdienstes 19 vollständig in das Produktionsnetz eingebunden ist. Danach wird er wieder gelöscht. Die Löschung erfolgt vorzugsweise durch den Integrationsdienst 19.

Es ist möglich, die obenstehend erläuterte Vorgehensweise von Grund auf vorzunehmen, also bereits beginnend mit dem Anschließen der ersten Produktionsmaschine 4 an das Rechnernetz 1. In diesem Fall wird mit jedem Anschließen einer Produktionsmaschine 4 jeweils ein neues virtuelles Rechnernetz 16 eingerichtet, über das die jeweilige Produktionsmaschine 4 mit ihrer jeweiligen virtuellen Bedienerschnittstelle 6 (und gegebenenfalls weiteren Einheiten) kommuniziert. In diesem Fall wird auch für jede Produktionsmaschine 4 jeweils ein eigener virtueller Router 20 eingerichtet und konfiguriert.

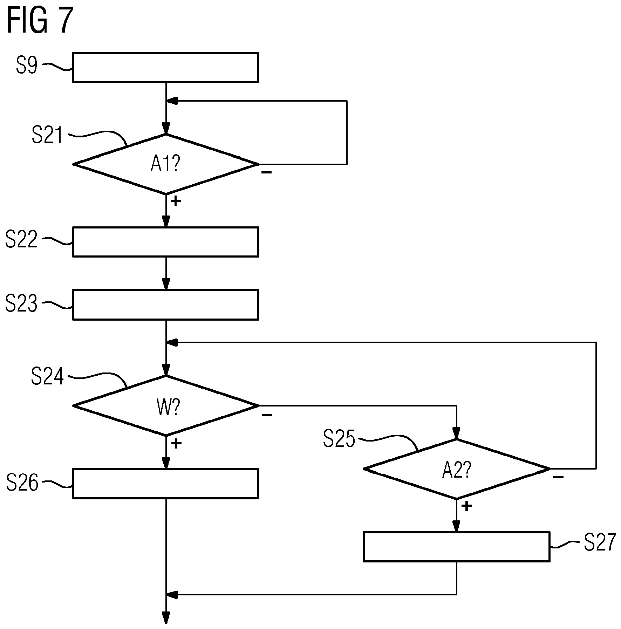

Vorzugsweise kann die Eingliederung und Integration des virtuellen Rechnernetzes 16 in das Gesamt-Rechnernetz 1 auch wieder rückgängig gemacht werden. Beispielsweise ist es entsprechend der Darstellung in FIG 7 möglich, dass in einem Schritt S21 überprüft wird, ob die Bedienperson 12 einen Ausgliederungsbefehl A1 (siehe FIG 1) vorgibt. In diesem Fall kann aufgrund des Ausgliederungsbefehls A1 in einem Schritt S22 ein Ausgliederungsdienst 23 aktiviert werden. Der Ausgliederungsdienst 23 trennt in diesem Fall in einem Schritt S23 aufgrund der Aktivierung automatisch den zuvor eingerichteten virtuellen Router 20 von der übergeordneten Einrichtung 7. Beispielsweise kann im Rahmen des Schrittes S23 die Verbindung des zuvor eingerichteten virtuellen Routers 20 mit der übergeordneten Einrichtung 7 unterbrochen werden. Ebenso ist es möglich, dass der Ausgliederungsdienst 23 im Schritt S23 den zuvor eingerichteten virtuellen Router 20 auflöst.

In dem nunmehr gegebenen Zustand besteht das virtuelle Rechnernetz 16 weiter. Es ist also weiterhin eine Kommunikation der weiteren Produktionsmaschine 4' mit der weiteren Bedienerschnittstelle 6' möglich. Diese Kommunikation verläuft nunmehr jedoch wieder isoliert von den übrigen über das Rechnernetz 1 erfolgenden Kommunikationen. Dieser Zustand ist in der Regel nur temporär. Entweder es erfolgt wieder eine Eingliederung, dass also der Schritt S23 rückgängig gemacht wird, oder die weitere Produktionsmaschine 4' wird völlig aus dem Rechnernetz 1 entfernt. Es wird daher in Schritten S24 und S25 geprüft, ob die Bedienperson 12 einen Wiedereingliederungsbefehl W oder einen Auflösungsbefehl A2 vorgibt. Wenn die Bedienperson 12 den Wiedereingliederungsbefehl W vorgibt, wird in einem Schritt S26 der Schritt S23 rückgängig gemacht. Der Schritt S26 entspricht teilweise oder vollständig den Schritten S8 und S9. Der Schritt S26 kann nach Bedarf vom Ausgliederungsdienst 23 oder vom Integrationsdienst 19 ausgeführt werden. Wenn die Bedienperson 12 den Auflösungsbefehl A2 vorgibt, trennt der Ausgliederungsdienst 23 in einem Schritt S27 zusätzlich die der weiteren Produktionsmaschine 4' zugeordnete virtuelle Bedienerschnittstelle 6' von der weiteren Produktionsmaschine 4'.

Zusammengefasst betrifft die vorliegende Erfindung somit folgenden Sachverhalt:
Ein Rechnernetz 1 weist Anschlüsse 2 auf, an die zum Teil Produktionsmaschinen (= PM) 4 angeschlossen sind, die über das Rechnernetz 1 jeweils zumindest mit einer zugeordneten virtuellen Bedienerschnittstelle (= vHMI) 6 und einer übergeordneten Einrichtung 7 außerhalb der PM 4 kommunizieren. Eine Überwachungskomponente 11 überwacht vorbestimmte Anschlüsse 2 auf das Anschließen einer weiteren PM 4'. Wird das Anschließen der weiteren PM 4' erkannt, wird automatisch ein Inbetriebnahmedienst 14 aktiviert, der seinerseits automatisch zumindest der weiteren PM 4' eine vHMI 6' zuordnet, innerhalb des Rechnernetzes 1 ein eigenes virtuelles Rechnernetz 16 neu einrichtet und die weitere PM 4' mit der ihr zugeordneten vHMI 6' über das neu eingerichtete virtuelle Rechnernetz 16 verbindet. Dadurch erfolgt die Kommunikation der weiteren PM 4' mit der zugeordneten vHMI 6' isoliert von anderen Kommunikationen. Die isolierte Kommunikation wird beibehalten, bis ein Freigabebefehl F vorgegeben wird. Dann wird ein Integrationsdienst 19 aktiviert, der seinerseits automatisch zumindest einen virtuellen Router 20 neu einrichtet, diesen virtuellen Router 20 über das virtuelle Rechnernetz 16 mit der weiteren PM 4' verbindet und den neu eingerichteten virtuellen Router 20 konfiguriert, so dass die weitere PM 4' über den neu eingerichteten virtuellen Router 20 mit der übergeordneten Einrichtung 7 kommuniziert.

Die vorliegende Erfindung weist viele Vorteile auf. Insbesondere können durch die Kombination von Überwachungskomponente 11, Inbetriebnahmedienst 14 und Integrationsdienst 19 - gegebenenfalls in Verbindung mit dem Lebensphasenkonfigurationsmodul 15 - auf einfache und automatisierte Weise sowohl eine isolierte Inbetriebsetzung der weiteren Produktionsmaschine 4' als auch deren vollständige Integration in das Rechnernetz 1 realisiert werden. Es ist keine manuelle Anpassung der Projektierung - insbesondere von IP-Adressen - erforderlich. Die Wartung wird vereinfacht. Insbesondere können beispielsweise lokale Bedienerschnittstellen 4c, 4c' ohne weiteres ausgetauscht werden, ohne zuvor eine Datensicherung vornehmen zu müssen.

## Patentansprüche

1. Betriebsverfahren für ein Rechnernetz (1), das eine Vielzahl von Anschlüssen (2) aufweist,
- wobei eine Anzahl von an einen Teil der Anschlüsse (2) angeschlossenen Produktionsmaschinen (4) über das Rechnernetz (1) jeweils zumindest mit einer der jeweiligen Produktionsmaschine (4) zugeordneten virtuellen Bedienerschnittstelle (6) kommuniziert,
- wobei die Produktionsmaschinen (4) über das Rechnernetz (1) weiterhin mit einer übergeordneten Einrichtung (7) kommunizieren,
- wobei die virtuellen Bedienerschnittstellen (6) und die übergeordnete Einrichtung (7) außerhalb der Produktionsmaschinen (4) angeordnet sind,
- wobei eine Überwachungskomponente (11) vorbestimmte der Anschlüsse (2) des Rechnernetzes (1) auf das Anschließen einer weiteren Produktionsmaschine (4') überwacht,
- wobei immer dann, wenn die Überwachungskomponente (11) das Anschließen der weiteren Produktionsmaschine (4') an einen beliebigen der vorbestimmten Anschlüsse (2) des Rechnernetzes (1) erkennt, automatisch ein Inbetriebnahmedienst (14) aktiviert wird,
- wobei der Inbetriebnahmedienst (14) aufgrund der Aktivierung automatisch zumindest
-- der weiteren Produktionsmaschine (4') eine virtuelle Bedienerschnittstelle (6') zuordnet,
-- innerhalb des Rechnernetzes (1) ein eigenes virtuelles Rechnernetz (16) neu einrichtet und
-- die weitere Produktionsmaschine (4') mit der ihr zugeordneten virtuellen Bedienerschnittstelle (6') über das neu eingerichtete virtuelle Rechnernetz (16) verbindet,
so dass eine von anderen über das Rechnernetz (1) erfolgenden Kommunikationen isolierte Kommunikation der weiteren Produktionsmaschine (4') mit der ihr zugeordneten virtuellen Bedienerschnittstelle (6') implementiert wird,
- wobei die isolierte Kommunikation der weiteren Produktionsmaschine (4') mit der ihr zugeordneten virtuellen Bedienerschnittstelle (6') beibehalten wird, bis von einer Bedienperson (12) ein Freigabebefehl (F) vorgegeben wird,
- wobei aufgrund der Vorgabe des Freigabebefehls (F) ein Integrationsdienst (19) aktiviert wird und
- wobei der Integrationsdienst (19) aufgrund der Aktivierung automatisch
-- zumindest einen virtuellen Router (20) neu einrichtet,
-- den neu eingerichteten virtuellen Router (20) über das neu eingerichtete virtuelle Rechnernetz (16) mit der weiteren Produktionsmaschine (4') verbindet und
-- den neu eingerichteten virtuellen Router (20) konfiguriert, so dass die weitere Produktionsmaschine (4') über den neu eingerichteten virtuellen Router (20) mit der übergeordneten Einrichtung (7) kommuniziert.

2. Betriebsverfahren nach Anspruch 1,
**dadurch gekennzeichnet ,**
**dass** nur ein Teil der Anschlüsse (2) des Rechnernetzes (1) vorbestimmte Anschlüsse (2) sind.

3. Betriebsverfahren nach Anspruch 1 oder 2,
**dadurch gekennzeichnet ,**
**dass** der Überwachungskomponente (11) von der Bedienperson (12) vorgegeben wird, welche der Anschlüsse (2) des Rechnernetzes (1) vorbestimmte Anschlüsse (2) sind.

4. Betriebsverfahren nach Anspruch 1, 2 oder 3,
**dadurch gekennzeichnet ,**
**dass** die weitere virtuelle Bedienerschnittstelle (6') zumindest teilweise eine Aufbereitung der über eine Eingabeeinrichtung der weiteren Produktionsmaschine (4') eingegebenen Eingaben und eine Aufbereitung der über eine Anzeige der weiteren Produktionsmaschine (4') auszugebenden Ausgaben durchführt.

5. Betriebsverfahren nach einem der obigen Ansprüche,
**dadurch gekennzeichnet ,**
**dass** der Inbetriebnahmedienst (14) im Rahmen der Zuordnung der virtuellen Bedienerschnittstelle (6') zu der weiteren Produktionsmaschine (4') diese virtuelle Bedienerschnittstelle (6') neu einrichtet oder eine bereits eingerichtete virtuelle Bedienerschnittstelle (6) für die weitere Produktionsmaschine (4') freischaltet oder eine bereits eingerichtete virtuelle Bedienerschnittstelle (6) für die weitere Produktionsmaschine (4') instanziiert.

6. Betriebsverfahren nach Anspruch 5,
**dadurch gekennzeichnet ,**
**dass** der Inbetriebnahmedienst (14) von der Bedienperson (12) oder von der weiteren Produktionsmaschine (4') eine Konfiguration (K) der virtuellen Bedienerschnittstelle (6') entgegennimmt oder von der weiteren Produktionsmaschine (4') einen Link (L) entgegennimmt und die Konfiguration (K) der virtuellen Bedienerschnittstelle (6') über den Link (L) herunterlädt und dass der Inbetriebnahmedienst (14) basierend auf der Konfiguration (K) die virtuelle Bedienerschnittstelle (6') einrichtet oder freischaltet.

7. Betriebsverfahren nach einem der obigen Ansprüche,
**dadurch gekennzeichnet ,**
**dass** der Inbetriebnahmedienst (14) aufgrund der Aktivierung automatisch zusätzlich auch einen Speicher (17) und/oder eine Datenbank (18) in das neu eingerichtete virtuelle Rechnernetz (16) einbindet.

8. Betriebsverfahren nach einem der obigen Ansprüche,
**dadurch gekennzeichnet ,**
**dass** dem Inbetriebnahmedienst (14) eine Topologie von Verteilerknoten (3) des Rechnernetzes (1) bekannt ist und dass der Inbetriebnahmedienst (14) zum Implementieren des neu eingerichteten virtuellen Rechnernetzes (16) die Verteilerknoten (3) entsprechend konfiguriert.

9. Betriebsverfahren nach einem der obigen Ansprüche,
**dadurch gekennzeichnet ,**
**dass** der Integrationsdienst (19) zum Einrichten des virtuellen Routers (20) eine virtuelle Netzwerkkarte (21) zu dem neu eingerichteten virtuellen Rechnernetz (16) und eine virtuelle Netzwerkkarte (22) zu der übergeordneten Einrichtung (7) implementiert und konfiguriert, so dass die weitere Produktionsmaschine (4') über das neu eingerichtete virtuelle Rechnernetz (16), die virtuelle Netzwerkkarte (21) zu dem neu eingerichteten virtuellen Rechnernetz (16) und die virtuelle Netzwerkkarte (22) zu der übergeordneten Einrichtung (7) mit der übergeordneten Einrichtung (7) kommuniziert.

10. Betriebsverfahren nach einem der obigen Ansprüche,
**dadurch gekennzeichnet ,**
**dass** aufgrund der Vorgabe eines Ausgliederungsbefehls (A1) durch die Bedienperson (12) ein Ausgliederungsdienst (23) aktiviert wird und dass der Ausgliederungsdienst (23) aufgrund der Aktivierung automatisch den zuvor eingerichteten virtuellen Router (20) von der übergeordneten Einrichtung (7) trennt.

11. Betriebsverfahren nach Anspruch 10,
**dadurch gekennzeichnet ,**
**dass** der Ausgliederungsdienst (23) den zuvor eingerichteten virtuellen Router (20) auflöst.

12. Betriebsverfahren nach Anspruch 11,
**dadurch gekennzeichnet ,**
**dass** der Ausgliederungsdienst (23) nach dem Trennen des virtuellen Routers (20) von der übergeordneten Einrichtung (7) aufgrund eines Auflösungsbefehls (A2) durch die Bedienperson (12) zusätzlich die der weiteren Produktionsmaschine (4') zugeordnete virtuelle Bedienerschnittstelle (6') von der weiteren Produktionsmaschine (4') trennt.

13. Betriebsverfahren nach einem der obigen Ansprüche,
**dadurch gekennzeichnet ,**
- **dass** ein Lebensphasenkonfigurationsmodul (15) implementiert wird,
- **dass** die Überwachungskomponente (11) das Erkennen des Anschließens der weiteren Produktionsmaschine (4') an einen der vorbestimmten Anschlüsse (2) des Rechnernetzes (1) an das Lebensphasenkonfigurationsmodul (15) meldet,
- **dass** der Inbetriebnahmedienst (14) von dem Lebensphasenkonfigurationsmodul (15) aktiviert wird,
- **dass** das Lebensphasenkonfigurationsmodul (15) den Freigabebefehl (F) von der Bedienperson (12) entgegennimmt und
- **dass** der Integrationsdienst (19) von dem Lebensphasenkonfigurationsmodul (15) aktiviert wird.

14. Computerprogramm, das Maschinencode (10) umfasst, der von einer Verwaltungskomponente (8) eines Rechnernetzes (1) unmittelbar abarbeitbar ist, wobei bei der Abarbeitung des Maschinencodes (10) die Verwaltungskomponente (8) eine Überwachungskomponente (11) des Rechnernetzes (1) implementiert und das Rechnernetz (1) gemäß einem Betriebsverfahren nach einem der obigen Ansprüche betreibt.

15. Verwaltungskomponente eines Rechnernetzes (1), wobei die Verwaltungskomponente mit einem Computerprogramm (9) nach Anspruch 14 programmiert ist, so dass sie aufgrund der Abarbeitung des Maschinencodes (10) des Computerprogramms (9) das Rechnernetz gemäß einem Betriebsverfahren nach einem der Ansprüche 1 bis 13 betreibt.

16. Rechnernetz, wobei das Rechnernetz eine Vielzahl von Anschlüssen (2) und eine Verwaltungskomponente (8) nach Anspruch 15 aufweist.

## Claims

1. Operating method for a computer network (1) comprising a plurality of ports (2),
- wherein a number of production machines (4) connected to some of the ports (2) communicate in each case with at least one virtual user interface (6) assigned to the respective production machine (4) via the computer network (1),
- wherein the production machines (4) furthermore communicate with a higher-ranking facility (7) via the computer network (1),
- wherein the virtual user interfaces (6) and the higher-ranking facility (7) are arranged outside the production machines (4),
- wherein a monitoring component (11) monitors designated ports (2) of the computer network (1) for the connection of a further production machine (4'),
- wherein, whenever the monitoring component (11) identifies the connection of the further production machine (4') to any one of the designated ports (2) of the computer network (1), a commissioning service (14) is activated automatically,
- wherein, as a result of the activation, the commissioning service (14) automatically at least
-- assigns a virtual user interface (6') to the further production machine (4'),
-- re-initialises an individual virtual computer network (16) within the computer network (1) and
-- connects the further production machine (4') to the virtual user interface (6') assigned thereto via the re-initialised virtual computer network (16),
so that a communication from the further production machine (4') isolated from other communications taking place via the computer network (1) is implemented with the virtual user interface (6') assigned thereto,
- wherein the isolated communication from the further production machine (4') with the virtual user interface (6') assigned thereto is retained until an operator (12) specifies a release command (F),
- wherein, as a result of the specification of the release command (F), an integration service (19) is activated and
- wherein, as a result of the activation, the integration service (19) automatically
-- re-initialises at least one virtual router (20),
-- connects the re-initialised virtual router (20) via the re-initialised virtual computer network (16) to the further production machine (4') and
-- configures the re-initialised virtual router (20) so that the further production machine (4') communicates with the higher-ranking facility (7) via the re-initialised virtual router (20).

2. Operating method according to claim 1,
**characterised in that**
only some of the ports (2) of the computer network (1) are designated ports (2).

3. Operating method according to claim 1 or 2,
**characterised in that**
the operator (12) specifies to the monitoring component (11) which of the ports (2) of the computer network (1) are designated ports (2).

4. Operating method according to claim 1, 2 or 3,
**characterised in that**
the further virtual user interface (6') at least partially edits the entries input via an input facility of the further production machine (4') and edits outputs to be output via a display on the further production machine (4').

5. Operating method according to one of the above claims,
**characterised in that**,
in the context of the assignment of the virtual user interface (6') to the further production machine (4'), the commissioning service (14) re-initialises this virtual user interface (6') or releases an already initialised virtual user interface (6) for the further production machine (4') or instantiates an already initialised virtual user interface (6) for the further production machine (4').

6. Operating method according to claim 5,
**characterised in that**
the commissioning service (14) receives a configuration (K) of the virtual user interface (6') from the operator (12) or from the further production machine (4') or receives a link (L) from the further production machine (4') and downloads the configuration (K) of the virtual user interface (6') via the link (L) and that the commissioning service (14) initialises or releases the virtual user interface (6') based on the configuration (K).

7. Operating method according to one of the above claims,
c h a r a c t e r i s e d i n that,
as a result of the activation, the commissioning service (14) automatically additionally also incorporates a memory (17) and/or a database (18) in the re-initialised virtual computer network (16).

8. Operating method according to one of the above claims,
**characterised in that**
the commissioning service (14) knows a topology of distributor nodes (3) of the computer network (1) and that the commissioning service (14) configures the distributor nodes (3) correspondingly for the implementation of the re-initialised virtual computer network (16).

9. Operating method according to one of the above claims,
**characterised in that**,
to initialise the virtual router (20), the integration service (19) implements and configures a virtual network card (21) for the re-initialised virtual computer network (16) and a virtual network card (22) for the higher-ranking facility (7) so that the further production machine (4') communicates with the higher-ranking facility (7) via the re-initialised virtual computer network (16), the virtual network card (21) for the re-initialised virtual computer network (16) and the virtual network card (22) for the higher-ranking facility (7).

10. Operating method according to one of the above claims,
**characterised in that**,
as a result of the specification of an exclusion command (A1) by the operator (12), an exclusion service (23) is activated and, as a result of the activation, that the exclusion service (23) automatically separates the previously initialised virtual router (20) from the higher-ranking facility (7).

11. Operating method according to claim 10,
**characterised in that**
the exclusion service (23) disconnects the previously initialised virtual router (20).

12. Operating method according to claim 11,
**characterised in that**,
after the separation of the virtual router (20) from the higher-ranking facility (7) as the result of a disconnect command (A2) by the operator (12), the exclusion service (23) additionally separates the virtual user interface (6') assigned to the further production machine (4') from the further production machine (4').

13. Operating method according to one of the above claims,
**characterised in that**
- a life-phase configuration module (15) is implemented,
- the monitoring component (11) reports the recognition of the connection of the further production machine (4') to one of the designated ports (2) of the computer network (1) to the life-phase configuration module (15),
- the commissioning service (14) is activated by the life-phase configuration module (15),
- the life-phase configuration module (15) receives the release command (F) from the operator (12) and
- the integration service (19) is activated by the life-phase configuration module (15).

14. Computer program comprising machine code (10) that can be directly executed by an administrative component (8) of a computer network (1), wherein, during the execution of the machine code (10), the administrative component (8) implements a monitoring component (11) of the computer network (1) and operates the computer network (1) in accordance with an operating method according to one of the above claims.

15. Administrative component of a computer network (1), wherein the administrative component is programmed with a computer program (9) according to claim 14 so that, as a result of the execution of the machine code (10) of the computer program (9), it operates the computer network in accordance with an operating method according to one of claims 1 to 13.

16. Computer network, wherein the computer network comprises a plurality of ports (2) and an administrative component (8) according to claim 15.

## Revendications

1. Procédé pour faire fonctionner un réseau (1) d'ordinateur, qui a une pluralité d'accès (2),
- dans lequel un certain nombre de machines (4) de production raccordées à une partie des accès (2) communique par le réseau (1) d'ordinateur respectivement au moins avec une interface (6) virtuelle d'opérateur affectée à la machine (4) respective de production,
- dans lequel les machines (4) de production communiquent en outre avec un dispositif (7) supérieur hiérarchiquement par l'intermédiaire du réseau (1) d'ordinateur,
- dans lequel les interfaces (6) virtuelles d'opérateur et le dispositif (7) supérieur hiérarchiquement sont disposés à l'extérieur des machines (4) de production,
- dans lequel un composant (11) de contrôle contrôle les accès (2) définis à l'avance du réseau (1) d'ordinateur sur le point de savoir s'ils sont raccordés à une autre machine (4') de production,
- dans lequel toujours lorsque le composant (11) de contrôle détecte le raccordement de l'autre machine (4') de production à un quelconque des accès (2) définis à l'avance du réseau (1) d'ordinateur, un service (14) de mise en fonctionnement est activé automatiquement,
- dans lequel le service (14) de mise en fonctionnement, sur la base de l'activation, automatiquement au moins
-- affecte à l'autre machine (4') de production, une interface (6') virtuelle d'opérateur,
-- au sein du réseau (1) d'ordinateur, établit à nouveau un réseau (16) virtuel propre d'ordinateur et
-- relie l'autre machine (4') de production à l'interface (6') virtuelle d'opérateur, qui lui est affectée, par l'intermédiaire du réseau (16) virtuel d'ordinateur établi nouvellement,
de manière à mettre en œuvre une communication, isolée d'autres communications s'effectuant par le réseau (1) d'ordinateur, de l'autre machine (4') de production avec l'interface (6') virtuelle d'opérateur, qui lui est affectée,
- dans lequel on conserve la communication isolée de l'autre machine (4') de production avec l'interface (6') virtuelle d'opérateur, qui lui est affectée, jusqu'à ce qu'une instruction (F) de validation soit prescrite par une personne (12) de service,
- dans lequel, sur la base de la prescription de l'instruction (F) de validation, un service (19) d'intégration est activé, et
- dans lequel le service (19) d'intégration, sur la base de l'activation automatiquement
-- établit nouvellement au moins un routeur (20) virtuel,
-- relie le routeur (20) virtuel établi nouvellement à l'autre machine (4') de production par l'intermédiaire du réseau (16) virtuel d'ordinateur établi nouvellement et
-- configure le routeur (20) virtuel établi nouvellement, de manière à ce que l'autre machine (4') de production communique avec le dispositif (7) supérieur hiérarchiquement par l'intermédiaire du routeur (20) virtuel établi nouvellement.

2. Procédé suivant la revendication 1,
**caractérisé en ce que**
seulement une partie des accès (2) du réseau (1) d'ordinateur sont des accès (2) définis à l'avance.

3. Procédé suivant la revendication 1 ou 2,
**caractérisé en ce qu'**
il est prescrit par la personne (12) de service au composant (11) de contrôle, les accès (2) du réseau (1) d'ordinateur, qui sont des accès (2) définis à l'avance.

4. Procédé suivant la revendication 1, 2 ou 3,
**caractérisé en ce que**
l'autre interface (6') virtuelle d'opérateur effectue au moins un traitement des entrées, entrées par l'intermédiaire d'un dispositif d'entrée de l'autre machine (4') de production et un traitement des sorties, sorties par l'intermédiaire d'un affichage de l'autre machine (4') de production.

5. Procédé suivant l'une des revendications précédentes, **caractérisé en ce que**
le service (14) de mise en fonctionnement établit nouvellement, dans le cadre de l'affectation de l'interface (6') virtuelle d'opérateur à l'autre machine (4') de production, cette interface (6') virtuelle d'opérateur ou valide par l'autre machine (4') de production une interface (6) virtuelle d'opérateur déjà établie ou met en instance, pour l'autre machine (4') de production, une interface (6) d'opérateur déjà établie.

6. Procédé suivant la revendication 5,
**caractérisé en ce que**
le service (14) de mise en fonctionnement reçoit de la personne (12) de service ou de l'autre machine (4') de production une configuration (K) de l'interface (6') virtuelle d'opérateur ou reçoit de l'autre machine (4') de production, une liaison (L) et charge la configuration (K) de l'interface (6') virtuelle d'opérateur par l'intermédiaire de la liaison (L), et **en ce que** le service (14) de mise en fonctionnement établit ou valide l'interface (6') virtuelle d'opérateur en se basant sur la configuration (K).

7. Procédé suivant l'une des revendications précédentes,
dans lequel le service (14) de mise en fonctionnement incorpore, en raison de l'activation, automatiquement supplémentairement également une mémoire (17) et/ou une base (18) de données dans le réseau (16) virtuel d'ordinateur établi nouvellement.

8. Procédé suivant l'une des revendications précédentes, **caractérisé en ce qu'**
une topologie de nœuds (3) de répartition du réseau (1) d'ordinateur est connue du service (14) de mise en fonctionnement et **en ce que** le service (14) de mise en fonctionnement configure en conséquence les nœuds (3) de répartition pour la mise en œuvre du réseau (16) virtuel d'ordinateur établi nouvellement.

9. Procédé suivant l'une des revendications précédentes, **caractérisé en ce que**
le service (19) d'intégration, pour l'établissement du routeur (20) virtuel, met en œuvre et configure une carte (21) virtuelle de réseau par rapport au réseau (16) virtuel d'ordinateur établi nouvellement et une carte (22) virtuelle de réseau par rapport au dispositif (7) supérieur hiérarchiquement, de manière à ce que l'autre machine (4') de production communique, par le dispositif (7) supérieur hiérarchiquement, par l'intermédiaire du réseau (16) virtuel d'ordinateur établi nouvellement, la carte (21) virtuelle de réseau au réseau (16) virtuel d'ordinateur établi nouvellement et la carte (22) virtuelle de réseau au dispositif (7) supérieur hiérarchiquement.

10. Procédé suivant l'une des revendications précédentes, **caractérisé en ce que**
sur la base de la prescription d'une instruction (A1) de ventilation par la personne (12) de service, on active un service (23) de ventilation, et **en ce que** le service (23) de ventilation sépare, sur la base de l'activation, automatiquement le routeur (20) virtuel établi auparavant du dispositif (7) supérieur hiérarchiquement.

11. Procédé suivant la revendication 10,
**caractérisé en ce que**
le service (23) de ventilation désintègre le routeur (20) virtuel établi précédemment.

12. Procédé suivant la revendication 11,
**caractérisé en ce que**
le service (23) de ventilation, après la séparation du routeur (20) virtuel du dispositif (7) supérieur hiérarchiquement, sépare, sur la base d'une instruction (A2) de séparation par la personne (12) de service en outre de l'autre machine (4') de production, l'interface (6') virtuelle d'opérateur affectée de l'autre machine (4') de production.

13. Procédé suivant l'une des revendications précédentes, **caractérisé**
- **en ce que** l'on met en œuvre un module (15) de configuration de phase de vie,
- **en ce que** le composant (11) de contrôle annonce, au module (15) de configuration de phase de vie, la détection du raccordement de l'autre machine (4') de production à l'un des accès (2) définis à l'avance du réseau (1) d'ordinateur,
- **en ce que** le service (14) de mise en fonctionnement est activé par le module (15) de configuration de phase de vie,
- **en ce que** le module (15) de configuration de phase de vie reçoit l'instruction (F) de validation de la personne (12) de service et
- **en ce que** le service (19) d'intégration est activé par le module (15) de configuration de phase de vie.

14. Programme d'ordinateur, qui comprend un code machine (10), qui peut être élaboré directement par un composant (8) de gestion d'un réseau (1) d'ordinateur, dans lequel, lors de l'élaboration du code machine (10), le composant (8) de gestion met en œuvre un composant (11) de contrôle du réseau (1) d'ordinateur et le réseau (1) d'ordinateur fonctionne suivant un procédé de fonctionnement suivant l'une des revendications précédentes.

15. Composant de gestion d'un réseau (1) d'ordinateur, dans lequel le composant de gestion est programmé par un programme (9) d'ordinateur suivant la revendication 14, de manière à faire fonctionner, sur la base de l'élaboration du code de machine (10) du programme (9) d'ordinateur, le réseau d'ordinateur suivant un procédé de fonctionnement suivant l'une des revendications 1 à 13.

16. Réseau d'ordinateur, dans le réseau d'ordinateur a une pluralité d'accès (2) et un composant (8) de gestion suivant la revendication 15.
